# EUROPÄISCHE PATENTSCHRIFT

(11) **EP 3 027 358 B1**
(45) Veröffentlichungstag und Bekanntmachung des Hinweises auf die Patenterteilung: **26.09.2018**
(21) Anmeldenummer: 14736632.2
(22) Anmeldetag: 01.07.2014
(51) Int. Cl.: B23Q 3/155, B23Q 7/04, B23Q 39/02

(54) **WERKZEUGMASCHINE MIT MEHREREN MEHRSPINDEL-SPINDELBAUGRUPPEN**
MACHINE TOOL HAVING A NUMBER OF MULTISPINDLE SPINDLE ASSEMBLIES
MACHINE-OUTIL COMPRENANT PLUSIEURS ENSEMBLES DE BROCHES MULTIBROCHES

(30) Priorität: 29.07.2013 DE 102013013050
(43) Veröffentlichungstag der Anmeldung: 08.06.2016
(73) Patentinhaber: Alfing Kessler Sondermaschinen GmbH, 73433 Aalen (DE)
(72) Erfinder: BURKHARDT, Rainer, 73433 Aalen (DE); FEIFEL, Hans, 73433 Aalen (DE); GÖGGERLE, Markus, 73497 Tannhausen (DE); HEIERMANN, Ulrich, 73207 Plochingen (DE); KRIEGER, Manfred, 73574 Iggingen (DE); STRAUB, Ulrich, 73079 Süssen (DE)
(74) Vertreter: Patentanwälte Bregenzer und Reule Partnerschaftsgesellschaft mbB
(86) Internationale Anmeldenummer: PCT/EP2014/001801
(87) Internationale Veröffentlichungsnummer: WO 2015/014428

(56) Entgegenhaltungen:
- EP-A1- 2 246 136
- WO-A2-2010/088181

## Beschreibung

Die Erfindung betrifft eine Werkzeugmaschine zur Bearbeitung von Werkstücken, gemäß dem Oberbegriff des Anspruchs 1.

Eine derartige Werkzeugmaschine ist z.B. in WO 2010/088181 A2 beschrieben.

Eine aus DE 10 2005 028 358 A1 bekannte Werkzeugmaschine ist mit einer Werkzeugwechseleinrichtung, beispielsweise einem seitlich angeordneten Werkzeugmagazin, ausgestattet, das von einem Arbeitsroboter mit Bearbeitungswerkzeugen bestückt wird. Ein frontal vor einer Spindelbaugruppe, deren Arbeitsspindeln vertikal übereinander angeordnet sind, angeordneter Werkstückhalter hält die Werkstücke während der Werkstückbearbeitung. Die bekannte Werkzeugmaschine ist eine Mehrspindel-Werkzeugmaschine.

Allerdings muss die bekannte Werkzeugmaschine für einen Werkzeugwechsel die Werkstückbearbeitung unterbrechen, beispielsweise indem die Spindelbaugruppe aus dem Arbeitsbereich nach oben in einen Werkzeugwechselbereich verfahren wird, so dass die Werkzeugwechseleinrichtung dort die Bearbeitungswerkzeuge austauschen kann. Im Sinne einer effizienten, schnellen Werkstückbearbeitung ist das nicht.

Es ist daher die Aufgabe der vorliegenden Erfindung, eine Werkzeugmaschine mit einer hohen Dynamik und schnellen Werkstückbearbeitung, insbesondere langen "Spanzeiten", bereitzustellen.

Zur Lösung der Aufgabe ist eine Werkzeugmaschine gemäß der technischen Lehre des Anspruchs 1 vorgesehen.

Es ist ein Grundgedanke dabei, dass die Spindelbaugruppen jeweils an individuellen Spindelbaugruppenführungen gelagert sind, beispielsweise Linearführungen, Drehführungen oder dergleichen, so dass mindestens eine Spindelbaugruppe die Werkstückbearbeitung durchführen kann, während mindestens eine andere Spindelbaugruppe gerade beim Werkzeugwechsel ist, also in den Werkzeugwechselbereich hinein bewegt ist. Für eine Werkstückbearbeitung steht also stets eine der Spindelbaugruppen zur Verfügung.

Die voneinander separaten Spindelbaugruppenführungen ermöglichen, dass die Spindelbaugruppen kollisionsfrei bewegt werden können, also nicht miteinander kollidieren, wenn beispielsweise eine Spindelbaugruppe gerade die Werkstückbearbeitung durchführt, während die andere Spindelbaugruppe in Richtung des Werkzeugwechselbereich oder aus diesem heraus in Richtung des Arbeitsbereichs verstellt wird.

In der nachfolgenden Beschreibung sowie auch bei den in der Zeichnung dargestellten Ausführungsbeispielen sind beispielsweise jeweils zwei bewegliche Spindelbaugruppen vorgesehen, wobei selbstverständlich auch weitere, beispielsweise drei oder vier Spindelbaugruppen vorgesehen sein können. Es ist auch denkbar, dass eine Spindelbaugruppe nur mit einer einzigen Arbeitsspindel ausgestattet ist, während zwei oder mehr andere Spindelbaugruppen jeweils Mehrspindel-Spindelbaugruppen sind, also mehrere Arbeitsspindeln aufweisen.

Die Erfindung sieht vor, dass die Spindelbaugruppen zur selben Werkzeugwechsel-Seite beweglich sind, so dass an einer einzigen, nämlich derselben Werkzeugwechsel-Seite der Werkzeugwechsel vorgenommen wird. Der Werkzeugwechselbereich für mindestens zwei Spindelbaugruppen ist also zweckmäßigerweise an der einzigen Werkzeugwechsel-Seite neben dem Arbeitsbereich vorgesehen, so dass die mindestens zwei Spindelbaugruppen für den Werkzeugwechsel jeweils zu derselben Werkzeugwechsel-Seite bewegt werden. An der Werkzeugwechsel-Seite befindet sich dann beispielsweise ein Werkzeugmagazin oder ein Bedienplatz für eine Bedienperson. Der Aufbau der Maschine ist somit sehr platzsparend und ökonomisch. Es ist aber möglich, dass beispielsweise mindestens eine dritte, weitere Spindelbaugruppe zu einer anderen Werkzeugwechsel-Seite für den Werkzeugwechsel bewegt wird. Es können also beispielsweise zwei oder mehr Werkzeugwechsel-Seiten vorgesehen sein, wobei es dann vorteilhaft ist, wenn mindestens zwei Spindelbaugruppen einen gemeinsamen Werkzeugwechselbereich haben.

Prinzipiell ist es aber auch möglich, dass trotz der voneinander separaten Spindelbaugruppenführungen unterschiedliche Werkzeugwechselbereiche für die erste und die mindestens eine zweite Spindelbaugruppe vorgesehen sind. Es ist also möglich, dass beispielsweise die erste Spindelbaugruppe zu einer ersten Seite, die andere Spindelbaugruppe zur einer anderen zweiten Seite für den Werkzeugwechsel verstellt werden.

Bevorzugt ist es, wenn zwischen dem Werkzeugwechselbereich und dem Arbeitsbereich mindestens eine Abschottung oder eine Schottwand vorgesehen ist. Somit kann der Werkzeugwechsel abseits des Arbeitsbereichs durchgeführt werden, ohne dass dort beispielsweise Kühlmittel, Späne oder dergleichen für eine Verschmutzung beispielsweise von Werkzeughalterungen oder dergleichen an den Arbeitsspindeln sorgen.

Eine Abschottung ist aber auch vorteilhaft zwischen dem Arbeitsbereich und einem zum Auswechseln der Werkstücke an der Werkstückhalteeinrichtung vorgesehenen Werkstückwechselbereich. Mithin verschmutzen also die Werkstücke bzw. die Halterungen für die Werkstücke beim Werkstückwechsel nicht durch beispielsweise Kühlmittel, Schmiermittel, Späne oder dergleichen.

Im Werkzeugwechselbereich befindet sich erfindungsgemäß ein Werkzeugmagazin. Im Werkzeugmagazin sind Bearbeitungswerkzeuge abgelegt und stehen für den Wechsel zur jeweiligen Arbeitsspindel bereit. Bevorzugt ist es, wenn das Werkzeugmagazin zum gleichzeitigen Wechsel von mindestens zwei Bearbeitungswerkzeugen ausgestaltet ist. Die Zahl der gleichzeitig auswechselbaren Bearbeitungswerkzeuge entspricht zweckmäßigerweise der Anzahl der Arbeitsspindeln der jeweiligen Spindelbaugruppe, an der Bearbeitungswerkzeuge zu tauschen oder zu wechseln sind. Somit können vorzugsweise sämtliche Arbeitsspindeln gleichzeitig Bearbeitungswerkzeuge wechseln.

Bei dem Werkzeugmagazin handelt es sich beispielsweise um eine Rundmagazin und/oder ein Trommelmagazin und/oder ein Kettenmagazin und/oder ein Regalmagazin oder Kombinationen davon. Mithin ist es also auch möglich, dass beispielsweise für die erste Spindelbaugruppe ein Werkzeugmagazin eines ersten Typs, zum Beispiel ein Rundmagazin, vorgesehen ist, während für die zweite Spindelbaugruppe oder weitere Spindelbaugruppen ein Werkzeugmagazin eines von dem ersten Typ verschiedenen zweiten Typs, zum Beispiel ein Regalmagazin, vorgesehen ist. Zweckmäßig ist es jedoch, wenn ein und dasselbe Werkzeugmagazin mindestens zwei, vorzugsweise sämtlichen der anhand der Spindelbaugruppenführungen sozusagen mobilen Spindelbaugruppen zugeordnet ist.

Die Spindelbaugruppenführungen sind zweckmäßigerweise als Linearführungen ausgestaltet. Es ist aber denkbar, dass beispielsweise die erste Spindelbaugruppenführung eine andere Bauart hat als die Spindelbaugruppenführung der zweiten Spindelbaugruppe oder weiterer Spindelbaugruppen, so dass z.B. eine Linearführung und eine Drehführung vorgesehen sind.

Bevorzugt ist es, wenn die erste Spindelbaugruppenführung und die zweite Spindelbaugruppenführung parallel verlaufende Führungsachsen oder Bewegungsachsen aufweisen. Zweckmäßigerweise handelt es sich bei den Führungsachsen mindestens einer Spindelbaugruppenführung, zweckmäßigerweise aller Spindelbaugruppenführungen, um horizontal verlaufende Führungsachsen.

Die Arbeitsspindeln mindestens einer der Spindelbaugruppen sind zweckmäßigerweise in einer Reihenrichtung nebeneinander angeordnet. Die Reihenrichtung kann eine horizontale oder eine vertikale Reihenrichtung sein. Bevorzugt ist es, wenn die Reihenrichtung parallel zu einer Führungsachse oder Bewegungsachse der jeweiligen ersten Spindelbaugruppenführung oder der mindestens einen zweiten Spindelbaugruppenführung ist.

Mindestens zwei Arbeitsspindeln einer Spindelbaugruppe sind zweckmäßigerweise horizontal nebeneinander oder horizontal übereinander angeordnet. Es können bei mindestens einer Spindelbaugruppe aber auch beispielsweise übereinander und nebeneinander angeordnete Arbeitsspindeln vorgesehen sein.

In dem Arbeitsbereich befindet sich zweckmäßigerweise mindestens eine ortsfeste Spindelbaugruppe mit mindestens einer Arbeitsspindel. Die ortsfeste Spindelbaugruppe kann selbstverständlich auch mehrere Arbeitsspindeln aufweisen.

Die ortsfeste Arbeitsspindel oder die ortsfesten Arbeitsspindeln eignet sich beispielsweise dazu, eine spezielle Positioniermechanik, insbesondere zu einer sehr feinen Verstellung des Bearbeitungswerkzeugs relativ zu dem zu bearbeitenden Werkstück, vorzusehen. Beispielsweise kann mit der mindestens einen ortsfesten Arbeitsspindel eine Feinbohrung hergestellt werden.

Die erste Spindelbaugruppe und/oder die mindestens eine zweite Spindelbaugruppe sind zweckmäßigerweise in dem Arbeitsbereich unterhalb der mindestens einen ortsfesten Spindelbaugruppe angeordnet. Die jeweils zugeordnete Spindelbaugruppenführung kann somit relativ nahe am Boden oder Untergrund geführt werden, beispielsweise direkt an einem Maschinenbett der Werkzeugmaschine angeordnet werden. Zudem ist die mindestens eine ortsfeste Spindelbaugruppe günstig für einen Werkzeugwechsel zugänglich, was später noch deutlich wird.

Bevorzugt ist eine Werkstückwechseleinrichtung zum Auswechseln von Werkstücken an der Werkstückhalteeinrichtung vorgesehenen. Die Werkstückwechseleinrichtung kann beispielsweise von einem Arbeitsroboter gebildet werden, aber auch von einem anderen Werkstückwechsler, der möglicherweise weniger flexibel einsetzbar ist als ein Arbeitsroboter.

Die Werkstückwechseleinrichtung macht zweckmäßigerweise eine Positionierbewegung eines Werkstückhalters der Werkstückhalteeinrichtung während der Werkstückbearbeitung durch das jeweilige Bearbeitungswerkzeug mit und ist zum Austausch mindestens eines nicht in der Werkstückbearbeitung befindlichen Werkstücks an dem Werkstückhalter während der Werkstückbearbeitung eines anderen vom Werkstückhalter gehaltenen Werkstücks durch mindestens eine der Spindelbaugruppen, z.B. die erste und/oder mindestens eine zweite Spindelbaugruppe, ausgestaltet.

Die Werkstückwechseleinrichtung ist zweckmäßigerweise zum Eingriff in den Arbeitsbereich und zum Auswechseln der Bearbeitungswerkzeuge direkt an einer oder mehreren im Arbeitsbereich befindlichen Arbeitsspindeln ausgestaltet, zum Beispiel der vorgenannten ortsfesten Spindelbaugruppe oder mindestens einer ortsfesten Arbeitsspindel. Der Arbeitsroboter kann also beispielsweise direkt in den Arbeitsbereich eingreifen und dort an einer oder mehreren Arbeitsspindeln Bearbeitungswerkzeuge wechseln. Es kann zum Beispiel vorgesehen sein, dass die Werkstückwechseleinrichtung zum Durchgreifen durch ein Gestell der Werkzeughalteeinrichtung hindurch bis zu der Arbeitsspindel, an der das Bearbeitungswerkzeug gewechselt werden soll, ausgestaltet ist.

Zweckmäßig ist es auch, wenn die Werkstückwechseleinrichtung zum Auswechseln der Bearbeitungswerkzeuge in ein Werkzeugmagazin hinein oder daraus heraus oder beides ausgestaltet ist. Es ist vorteilhaft, wenn die Werkstückwechseleinrichtung zusätzlich zu dem Auswechseln von Werkstücken auch zum Auswechseln von Bearbeitungswerkzeugen an dem erwähnten Werkzeugmagazin ausgestaltet ist. Mithin kann also auch das Werkzeugmagazin von der Werkstückwechseleinrichtung, zum Beispiel dem Arbeitsroboter, bedient werden.

Die Führungsanordnung umfasst zweckmäßigerweise eine Werkstückhalter-Führung zum Führen der Werkstückhalteeinrichtung für eine Positionierung eines die Werkstücke haltenden Werkstückhalters relativ zu den jeweils bearbeitenden Bearbeitungswerkzeugen. Somit kann also das Werkstück relativ zum Bearbeitungswerkzeug bewegt werden, um die vorzugsweise spanabhebende Werkstückbearbeitung zu leisten.

Die Werkstückhalter-Führung umfasst beispielsweise einen oder mehrere Schlitten, mit dem der Werkstückhalter beispielsweise in Z-Richtung und/oder Y-Richtung und/oder X-Richtung verstellbar ist.

An dieser Stelle sei bemerkt, dass die Positionierarbeit verständlich auch auf Seiten der jeweiligen Arbeitsspindel, insbesondere der Spindelbaugruppe, geleistet werden kann. Beispielsweise sind nämlich die erste und/oder die mindestens eine zweite Spindelbaugruppe anhand der Spindelbaugruppenführungen für die Werkstückbearbeitung positionierbar. Die Positionierung der Spindelbaugruppen erfolgt zweckmäßigerweise in X-Richtung, kann aber auch in Z-Richtung und/oder Y-Richtung und/oder X-Richtung vorgesehen sein.

Die Werkstückhalter-Führung ist zweckmäßigerweise zum Führen des Werkstückhalters in mindestens einer zu der Spindelbaugruppen-Führungsachsen der ersten Spindelbaugruppenführung und/oder der zweiten Spindelbaugruppenführung der mindestens einen ersten oder zweiten Spindelbaugruppe quer, zum Beispiel rechtwinkelig quer, verlaufenden Werkstück-Führungsachse ausgestaltet.

Ein bevorzugtes Ausführungsbeispiel, das in der Zeichnung noch näher erläutert wird, sieht vor, dass die Spindelbaugruppenführungen der ersten Spindelbaugruppe und der mindestens einen zweiten Spindelbaugruppe zu einer linearen Verstellung parallel zu einer ersten Spindelbaugruppen-Führungsachse vorgesehen sind. Die erste Führungsachse ist beispielsweise eine horizontal verlaufende X-Achse.

Die Werkstückhalter-Führung ist zweckmäßigerweise zum Führen des Werkstückhalters parallel zu einer zu der ersten Spindelbaugruppen-Führungsachse rechtwinkeligen verlaufenden zweiten Führungsachse, beispielsweise in einer horizontalen Z-Achse, ausgestaltet. Somit kann also beispielsweise die jeweilige Spindelbaugruppe in X-Richtung verfahren werden, während die Werkstücke von der Werkstückhalteeinrichtung in Richtung der Spindelachsen der Arbeitsspindeln, nämlich in Z-Richtung durch die Werkstückhalter-Führung, zum Beispiel einen Schlitten, und/oder in Y-Richtung geführt werden.

In diesem Zusammenhang ist es nämlich zweckmäßig, wenn eine Verstellung des Werkstückhalters auch in Richtung einer dritten Führungsachse möglich ist, die vorteilhaft vertikal in Y-Richtung verläuft. Jedenfalls ist die dritte Führungsachse zweckmäßigerweise rechtwinkelig zur ersten und zweiten Führungsachse.

Wie schon erwähnt, ermöglicht die erste Spindelbaugruppenführung und/oder die zweite Spindelbaugruppenführung (oder jede weitere Spindelbaugruppenführung) eine Positionierung und/oder eine Zustellbewegung der jeweiligen Spindelbaugruppe zu mindestens einem jeweils zu bearbeitenden Werkstück.

Die Arbeitsspindeln mindestens einer der Spindelbaugruppen oder aller Spindelbaugruppen sind zweckmäßigerweise ortsfest in dem jeweiligen Spindelgehäuse angeordnet. Es ist aber auch möglich, dass mindestens eine Arbeitsspindel in dem jeweiligen Spindelgehäuse beweglich angeordnet ist, beispielsweise für eine Zustellbewegung zum jeweils zu bearbeitenden Werkstück.

Die Spindelbaugruppenführungen, jedenfalls mindestens eine Spindelbaugruppenführung, der Spindelbaugruppen sind zweckmäßigerweise an einem turmartigen oder portalartigen Gestell angeordnet. Es ist auch möglich, dass die Spindelbaugruppenführungen zweier Spindelbaugruppen an voneinander separaten Gestellen angeordnet sind. Unter einem Gestell kann in diesem Zusammenhang auch beispielsweise eine Art Maschinenbett oder Führungsbett verstanden werden, an welchem eine Spindelbaugruppenführung angeordnet ist. Mithin kann also beispielsweise eine Spindelbaugruppenführung unten, nahe am Maschinenbett, verlaufen, während eine andere, oberhalb verlaufende Spindelbaugruppenführung an einem Gestell angeordnet ist.

Das flexible Konzept der Erfindung erlaubt es, dass die Spindeln der ersten Spindelbaugruppe und die Spindeln der mindestens einen zweiten Spindelbaugruppe gleichzeitig in bearbeitendem Eingriff mit den von der Werkstückhalteeinrichtung gehaltenen Werkstücken bringbar sind. Es ist aber auch möglich, dass die Spindelbaugruppenführungen der Spindelbaugruppen einen derartigen Abstand zueinander haben, dass bei der Werkstückbearbeitung der Werkstücke durch die eine Spindelbaugruppe die andere Spindelbaugruppe an der Werkstück-Halterung oder den Werkstücken vorbei bewegbar ist, zum Beispiel zur Verstellung in Richtung des Werkzeugwechselbereich oder aus dem Werkzeugwechselbereich zurück in den Arbeitsbereich.

Bei der Werkzeugmaschine ist vorteilhaft vorgesehen, dass sie eine Werkstückwechseleinrichtung, insbesondere einen Arbeitsroboter, zum Auswechseln von Werkstücken an der Werkstückhalteeinrichtung aufweist, die eine Positionierbewegung des Werkstückhalters während der Werkstückbearbeitung durch das jeweilige Bearbeitungswerkzeug mitmacht und zum Austausch mindestens eines nicht in der Werkstückbearbeitung befindlichen Werkstücks an dem Werkstückhalter während der Werkstückbearbeitung eines anderen vom Werkstückhalter gehaltenen Werkstücks durch die erste Spindelbaugruppe ausgestaltet ist.

Es ist dabei ein Grundgedanke, dass der Werkstückwechsel sozusagen die Werkstückbearbeitung nicht stört, d.h. dass die Werkstückbearbeitung fortgesetzt werden kann, während der Werkstückwechsel am Werkstückhalter durchgeführt wird. Die Werkstückbearbeitung kann also gleichzeitig mit dem Werkstückwechsel durchgeführt werden, was die Maschine sehr schnell macht.

Zur Synchronisierung der Bewegungen der Werkstückhalteeinrichtung und der Werkstückwechseleinrichtung ist vorteilhaft eine gemeinsame Steuerung zur Ansteuerung beider Komponenten, nämlich der Werkstückhalteeinrichtung und der Werkstückwechseleinrichtung vorgesehen. Es ist aber auch möglich, dass zwei separate, die Werkstückwechseleinrichtung und die Werkstückhalteeinrichtung ansteuernde Steuerungen synchronisiert arbeiten. Eine vorteilhafte Ausführungsform der Erfindung sieht beispielsweise eine zur Ansteuerung der Werkstückhalteeinrichtung vorgesehene Halter in gestrichelten und eine zur Ansteuerung der Werkstückwechseleinrichtung vorgesehene und mit der Halter-Steuerung synchronisierte Wechsler-Steuerung vor. Die beiden Steuerungen können beispielsweise über einen Bus, zum Beispiel einen Feldbus, miteinander kommunizieren.

Eine sowohl die Werkstückwechseleinrichtung als auch die Werkstückhalteeinrichtung ansteuernde Steuerung ist zweckmäßigerweise zur Ausführung eines ersten Steuerungsmoduls und eines zweiten Steuerungsmoduls ausgestaltet, die gemeinsam auf einem Prozessor der Steuerung ausführbar sind und unmittelbar miteinander kommunizieren, beispielsweise über einen gemeinsamen Speicherbereich, anhand von Nachrichten innerhalb des Steuerungsrechners oder dergleichen. Die Steuerungsmodul sind z.B. Softwaremodule . Eine vorteilhafte Ausführungsform kann aber auch vorsehen, dass nur ein einziges Steuerungsmodul vorhanden ist, das zur Ansteuerung der Werkstückhalteeinrichtung und der Werkstückwechseleinrichtung ausgestaltet ist, so dass eine synchrone Ansteuerung schon allein deshalb gewährleistet ist.

Die Werkstückwechseleinrichtung oder deren Steuerung weist zweckmäßigerweise eine Eingangsschnittstelle auf, über die ein die Position der Werkstückhalteeinrichtung enthaltendes Positionssignal empfangbar ist. Die Werkstückwechseleinrichtung ist zweckmäßigerweise zur Ausführung einer Überlagerung-Positionierbewegung ausgestaltet, bei der einer ersten Positionierbewegung eine zweite Positionierbewegung überlagert ist. Die erste Positionierbewegung dient zum Austauschen von Werkstücken bei einer ortsfest stehenden Werkstückhalteeinrichtung, was an sich üblich ist, während die zweite Positionierbewegung zum simultanen Folgen der Bewegung der Werkstückhalteeinrichtung dient. Im Prinzip leistet also die Werkstückwechseleinrichtung überlagert beide Positionierbewegungen, so dass sich ein fließender Ablauf beim Werkstückwechsel ergibt.

Neben dem simultanen Ansteuern von Werkstückwechseleinrichtung und Werkstückhalteeinrichtung, so dass eine quasi gleichzeitiges, jedenfalls koordiniertes Bewegen beider Komponenten möglich ist, ist es auch möglich, dass die Werkstückhalteeinrichtung eine Positionsmarkierung aufweist, anhand derer die Werkstückwechseleinrichtung der Werkstückhalteeinrichtung sozusagen folgen kann. Die Positionsmarkierung umfasst beispielsweise eine Funkmarkierung, eine optische Markierung oder dergleichen. Durch eine so genannte Triangulation ist es z.B. möglich, dass die Werkstückwechseleinrichtung der Werkstückhalteeinrichtung folgt. Unter dem Begriff "folgen" soll aber nicht verstanden werden, dass die Werkstückwechseleinrichtung der Werkstückhalteeinrichtung sozusagen hinterher hinkt, sondern dass eine hohe Genauigkeit und simultane Bewegung beider Komponenten gewährleistet ist.

An der Werkstückwechseleinrichtung ist zweckmäßigerweise eine Magazin-Halterung zum Halten mindestens zweier Werkstücke vorgesehen, so dass die Werkstückwechseleinrichtung simultan mindestens zwei Werkstücke, vorzugsweise alle einer simultanen Werkstückbearbeitung zugeordnete Werkstücke wechseln kann. Wenn also beispielsweise drei Arbeitsspindeln bei einer jeweiligen Spindelbaugruppe vorgesehen sind, sind gleichfalls drei Werkstücke gleichzeitig vom Werkstückhalter bereitzustellen. Die Magazin-Halterung ermöglicht dann zweckmäßigerweise das gleichzeitige Auswechseln dreier Werkstücke. Die Zahl drei ist dabei nur beispielhaft zu verstehen und kann beispielsweise auch zwei, vier oder mehr lauten.

An der Werkstückhalteeinrichtung befindet sich zweckmäßigerweise mindestens eine Einführschräge zum Einführen des jeweiligen Werkstücks. Es ist auch vorteilhaft, wenn eine Rasteinrichtung zum Verrasten des jeweiligen Werkstücks an der Werkstückhalteeinrichtung vorgesehen ist. Beide Maßnahmen tragen dazu bei, dass etwaige Ungenauigkeiten bei der Positionierung der Werkstückwechseleinrichtung relativ zur Werkstückhalteeinrichtung, wobei die Werkstückwechseleinrichtung dem Bearbeitungsprozess bei der Werkstückbearbeitung sozusagen folgt, nämlich der Bewegung der Werkstückhalteeinrichtung, ausgeglichen werden.

Es ist vorteilhaft, wenn der Werkstückwechsel während Bewegungsphasen stattfindet, bei denen sich die Werkstückhalteeinrichtung langsam bewegt, so dass die Positionierarbeit der Werkstückwechseleinrichtung erleichtert wird. Die erläuterte Steuerung, zum Beispiel das gemeinsame Steuermodul oder die verschiedenen Steuerungsmodule, sind zweckmäßigerweise so ausgestaltet, dass langsame Bewegungsphasen zum effektiven Werkstückwechsel genutzt werden, während die Werkstückwechseleinrichtung beispielsweise während schnellerer Bewegungsphasen abseits der Werkstückhalteeinrichtung positioniert ist oder einem Trägerelement der Werkstückhalteeinrichtung zunächst noch folgt, bevor sie während einer anschließenden langsameren Bewegungsphase Werkstücke am Trägerelement ablegt oder von dort aufnimmt.

Bevorzugt ist es, wenn die Werkstückwechseleinrichtung zum Betätigen der Werkstückhalteeinrichtung in eine zum Halten eines Werkstücks vorgesehene Haltestellung und/oder in eine zum Freigeben und Entfernen eines Werkstücks vorgesehene Lösestellung ausgestaltet. Die Werkstückwechseleinrichtung betätigt also aktiv die Werkstückhalteeinrichtung, so dass diese beispielsweise in eine Spannstellung verfährt oder in eine Lösestellung, um den Werkstückwechsel zu ermöglichen.

Die Werkstückwechseleinrichtung ist zweckmäßigerweise zur Positionierung der Werkstücke zu mindestens einer weiteren Arbeitsstation abseits der Werkstückhalteeinrichtung ausgestaltet. Beispielsweise kann die Arbeitsstation zum Entgraten von Werkstücken dienen. Aber auch ein Kennzeichnen und/oder Vermessen von Werkstücken kann an der weiteren Arbeitsstation stattfinden. Somit kann also die Werkstückwechseleinrichtung beispielsweise während Zeiten, wo kein Werkstückwechsel eine der Werkstückhalteeinrichtung nötig ist, weitere Arbeiten leisten.

Die Werkstückhalteeinrichtung kann beispielsweise einen sogenannten Doppelwendespanner aufweisen. Die Werkstückhalter dieses Doppelwendespanners sind an einem Gestell mit zwei Armen schwenkbar gelagert, wobei die beiden Arme um eine zentrale Schwenkachse schwenken. Die Werkstückhalter können an den Armen in der Art von Planeten relativ zu der zentralen Schwenkachse schwenken. Die Werkstückhalteeinrichtung kann auch z.B. einen Werkstückhalter mit mehreren Werkstückhaltebereichen aufweisen, wobei der Werkstückhalter in der Art eines Balkens ausgestaltet ist und um eine Schwenkachse schwenkt.

Die erfindungsgemäße Werkzeugmaschine ist zweckmäßigerweise eine Werkzeugmaschine zur spanabhebenden Bearbeitung von Werkstücken. Bei den Werkstücken handelt es sich vorzugsweise um Motorbauteile, zum Beispiel Pleuel, Motorblöcke oder dergleichen. Die Bearbeitungswerkzeuge sind zweckmäßigerweise Fräsköpfe, Bohrer, Drehwerkzeuge oder dergleichen.

Nachfolgend werden Ausführungsbeispiele der Erfindung anhand der Zeichnung erläutert. Es zeigen:
- Figur 1: eine perspektivische Schrägansicht einer ersten erfindungsgemäßen Werkzeugmaschine mit einem Regal-Werkzeugmagazin und einer Steuerung,
- Figur 2: die Werkzeugmaschine gemäß Figur 1, jedoch mit zwei weiteren Arbeitsstationen, die von einer Werkstückwechseleinrichtung in Gestalt eines Arbeitsroboters bedient werden,
- Figur 3: die Werkzeugmaschine gemäß Figur 1, jedoch zur Veranschaulichung von Details mit zum Teil entfernten Komponenten,
- Figur 4: eine Variante des Ausführungsbeispiels gemäß Figur 1, jedoch mit einem Trommelmagazin,
- Figur 5: eine weitere Variante der Werkzeugmaschine gemäß Figur 1, jedoch mit einem Kettenmagazin, und
- Figur 6: ein zweites Ausführungsbeispiel einer erfindungsgemäßen Werkzeugmaschine mit einer alternativen Spindelgruppen-Führungsanordnung.

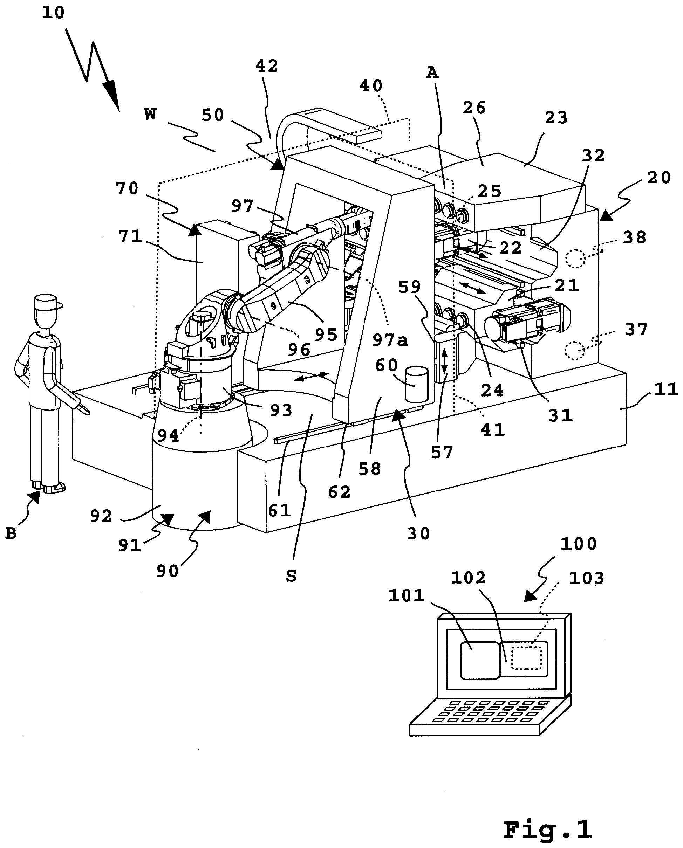

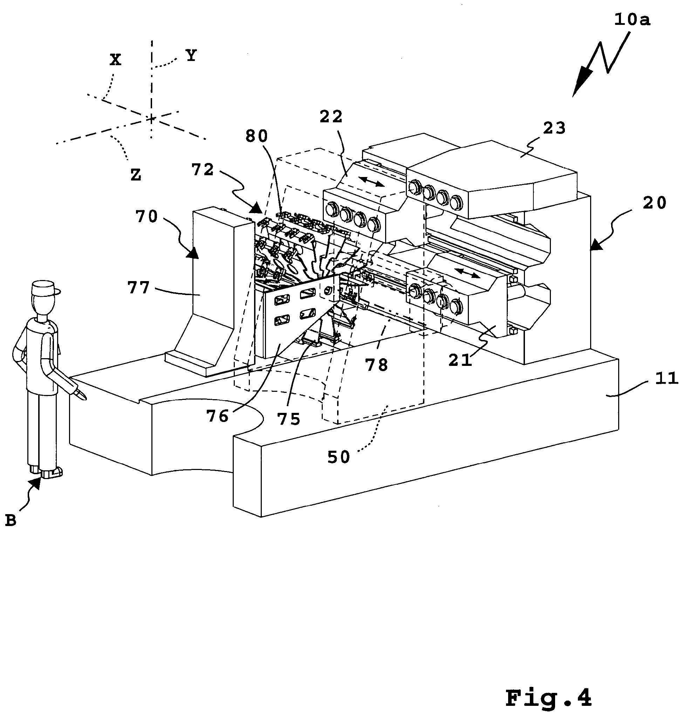

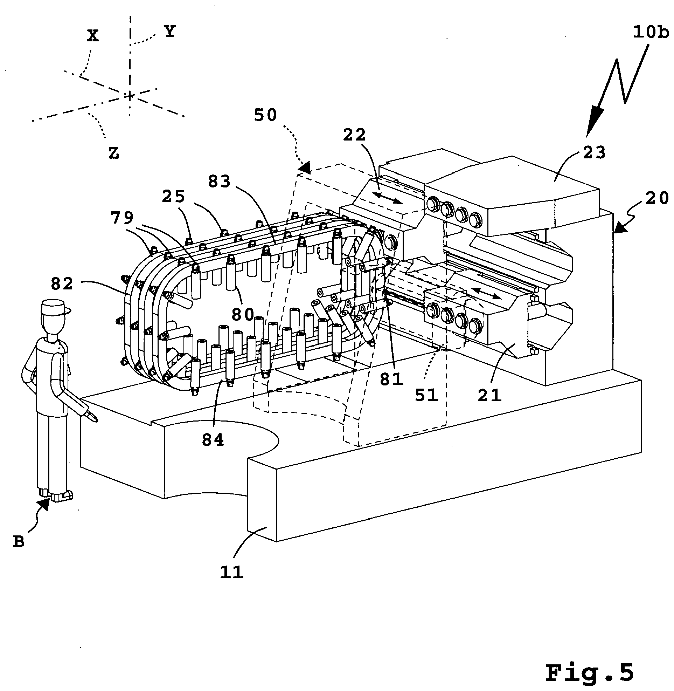

In der nachfolgenden Beschreibung sind gleiche oder gleichartige Komponenten teilweise mit denselben Bezugsziffern versehen. Bei den beiden in den Figuren 4 und 5 dargestellten Varianten der Werkzeugmaschine gemäß Figur 1 sind teilweise Bezugsziffern mit einem zusätzlichen Buchstaben "a" oder "b" verwendet, während beim Ausführungsbeispiel gemäß Figur 7 die Bezugsziffern im Vergleich zu den Ausführungsbeispielen gemäß Figuren 1-6 um 100 größer sind. Es versteht sich, dass die verschiedenen Varianten, die im Zusammenhang mit den unterschiedlichen Ausführungsbeispielen erwähnt werden, ohne weiteres auch kombinierbar sind.

An einem Maschinenbett 11 einer Werkzeugmaschine 10 ist ein Gestell 20 mit einer ersten Spindelbaugruppe 21, einer zweiten Spindelbaugruppe 22 und einer dritten Spindelbaugruppe 23 angeordnet, die jeweils insgesamt 4 Arbeitsspindeln 24 aufweisen.

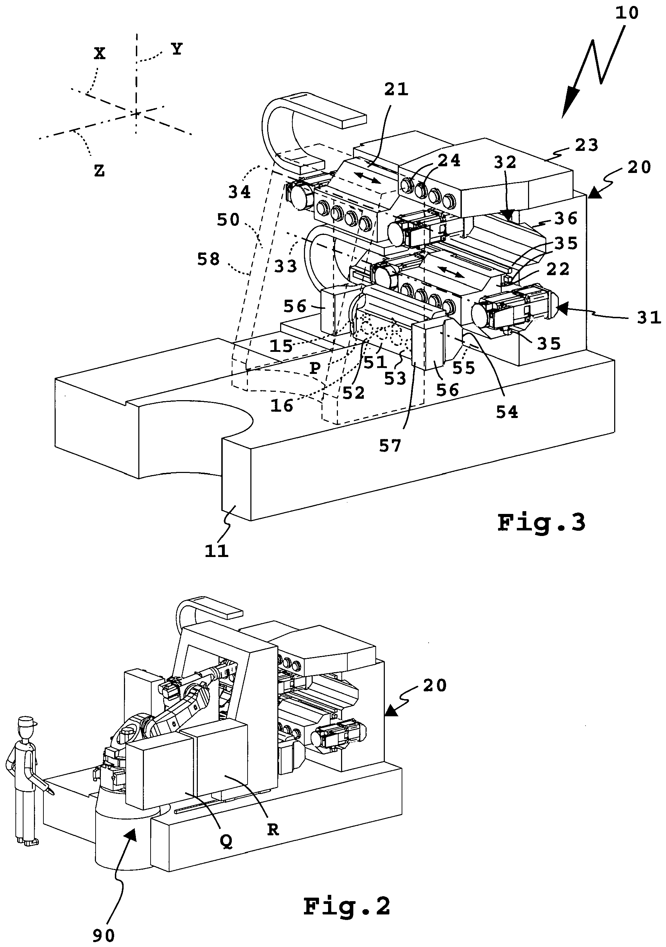

An den schematisch dargestellten Arbeitsspindeln 24 sind Bearbeitungswerkzeuge 25, zum Beispiel Bohrköpfe, Fräswerkzeuge oder dergleichen andere insbesondere spanabhebende oder zu einer Schleifbearbeitung vorgesehene Bearbeitungswerkzeuge lösbar anordenbar. Mit den Bearbeitungswerkzeugen können Werkstücke P, die schematisch in Figur 3 dargestellt sind, bearbeitet werden. Bei den Werkstücken P handelt es sich beispielsweise um Pleuel oder sonstige Metall-Werkstücke. Selbstverständlich eignet sich die Werkzeugmaschine 10 auch für andere Werkstücke, zum Beispiel Motorblöcke oder dergleichen. In diesem Zusammenhang sei erwähnt, dass eine Bearbeitung von Motorbauteilen ein bevorzugtes Anwendungsfeld der Erfindung ist.

Das Gestell 20 ist turmartig aufgebaut.

Die Spindelbaugruppen 21-23 sind in vertikaler Richtung, also in Richtung einer Y-Achse, übereinander angeordnet. Die Spindelbaugruppe 21 ist die untere, die Spindelbaugruppe 22 mittlere und die Spindelbaugruppe 23 die obere Spindelbaugruppe der Anordnung.

Die Arbeitsspindeln 24 der Spindelbaugruppen 21-23 sind jeweils in einem Spindelgehäuse 26 aufgenommen.

Die Spindelbaugruppe 23 ist auch ortsfest im Arbeitsbereich A der Werkzeugmaschine 10, der zur Werkstückbearbeitung vorgesehen ist angeordnet, während die beiden anderen Spindelbaugruppen 21, 22 sozusagen mobile Spindelbaugruppen sind und zwischen dem Arbeitsbereich A und einem Werkzeugwechselbereich W beweglich sind. Im Werkzeugwechselbereich W findet der Wechsel von Bearbeitungswerkzeugen 25 statt, im Arbeitsbereich A die Werkstückbearbeitung der Werkstücke P. Der Werkzeugwechselbereich W ist an einer Werkzeugwechsel-Seite 42 neben dem Gestell 20 vorgesehen.

Eine Führungsanordnung 30 mit einer ersten Spindelbaugruppenführung 31 für die Spindelbaugruppe 21 und einer zweiten Spindelbaugruppenführung 32 für die Spindelbaugruppe 22 ermöglicht die Verstellung der Spindelbaugruppen 21, 22 zwischen dem Arbeitsbereich A und dem Werkstückwechselbereich W.

Die Spindelbaugruppenführungen 31, 32 haben sich in Richtung von Führungsachsen 33, 34 erstreckende Führungsschienen 35, an denen die Spindelgehäuse 26 der Spindelbaugruppen 21, 22 in der Art von Schlitten linear beweglich gelagert sind. Mithin sind also Linearführungen 36 realisiert. Es versteht sich, dass die Spindelgehäuse 26 unmittelbar Schlitten bilden, aber auch an einem Schlitten angeordnet sein können.

Die Schlitten oder Spindelgehäuse 26 der Spindelbaugruppen 21, 22 sind durch Antriebe 37, 38 unabhängig voneinander antreibbar, so dass sie unabhängig voneinander entlang der Führungsachsen 33, 34 bewegt werden können. Bei den Antrieben 37, 38 handelt es sich beispielsweise um elektromotorische und/oder fluidische, zum Beispiel pneumatische oder hydraulische, Antriebe.

Die Führungsachsen 33, 34, die man auch als Bewegungsachsen bezeichnen kann, erstrecken sich parallel zu einer X-Richtung, sozusagen in X-Achsrichtung.

Die Arbeitsspindeln 24 einer jeweiligen Spindelbaugruppe 21, 23, 23 sind in einer Reihenrichtung 27 in der gleichen Richtung nebeneinander wie die Führungsachsen 33, 34, nämlich in Richtung der X-Achse angeordnet.

Die Spindelbaugruppen 21, 22, 23 haben sozusagen eine flach liegende Ausgestaltung, so dass sie in Richtung der Y-Achse und mittelbar über einander und mit geringem Abstand angeordnet sein können.

Der Arbeitsbereich A und der Werkzeugwechselbereich W sind beispielsweise durch eine Schottwand 40 voneinander getrennt, so dass beispielsweise im Arbeitsbereich A anfallende Späne, Kühlmittel oder dergleichen nicht in den Werkzeugwechselbereich W gelangen.

Eine weitere, ebenfalls schematisch angedeutete Schottwand 41 befindet sich zwischen dem Arbeitsbereich A und einem Werkstückwechselbereich S, der zum Auswechseln von Werkstücken P vorgesehen ist.

Die Schottwände 40, 41 können selbstverständlich mehrteilig sein und eine oder mehrere bewegliche Komponenten aufweisen. Die Schottwand 40 kann eine oder mehrere Öffnungen aufweisen, so dass jedenfalls die Spindelbaugruppen 21, 22 vom Arbeitsbereich A in den Werkzeugwechselbereich W und umgekehrt verstellt werden können.

Auch die Schottwand 41 kann eine oder mehrere Öffnungen aufweisen. Jedenfalls erlaubt die Schottwand 41 eine Beweglichkeit einer Werkstückhalteeinrichtung 50.

Die Werkstückhalteeinrichtung 50 umfasst beispielsweise einen Werkstückhalter 51. Der Werkstückhalter 51 umfasst einen balkenartigen Haltekörper 52, der mehrere Werkstückhaltebereiche 53, 54 (oder weitere Werkstückhaltebereiche) umfasst, die zueinander winkelig sind. Der Haltekörper 52 ist um eine Schwenkachse 55 schwenkbar an Lagerböcken 56 gelagert. Die Lagerböcke 56, ihrerseits wiederum bilden zusammen mit dem Haltekörper 52 einen Schlitten 57, der an einem rahmenartigen Gestell 58 der Werkstückhalteeinrichtung 50 beweglich gelagert ist, nämlich in einer Y-Richtung.

An einer dem Gestell 20 zugewandten Frontseite des Gestells 58 befinden sich beispielsweise Führungsschienen einer Werkstückhalter-Führung 59, die eine Verstellung des Werkstückhalters 51 in Y-Richtung ermöglicht. Ein schematisch angedeuteter Antrieb 60 treibt den Schlitten 57 an. Die Werkstückhalter-Führung 59 ist eine Linearführung.

Das Gestell 58 seinerseits wiederum ist an Führungsschienen 61 einer Werkstückhalter-Führung 62 ebenfalls linear beweglich gelagert, jedoch nicht in Y-Richtung, sondern in Richtung einer Z-Achse.Somit kann also das Gestell 58 in der Art eines Schlittens den Werkstückhalter 51 zu den Arbeitsspindeln 24 entlang der Z-Achse vor und zurück verfahren, beispielsweise um Bohrungen durchzuführen.

Die Werkstückhalter-Führungen 59, 62 führen den Werkstückhalter 51 in Richtung einer ersten Werkstück-Führungsachse 63 und einer zweiten Werkstück-Führungsachse 64.

Der andere Schlitten 57 ermöglicht die Verstellbarkeit des Werkstückhalters 51 in Richtung der Y-Achse, so dass der Werkstückhalter 51 relativ zu der jeweils bearbeitenden Spindelbaugruppe 21, 22, 23 positionierbar ist. Bevorzugt sind die Abstände in Y-Richtung zwischen diesen Spindelbaugruppen 21, 22, 23 so bemessen, dass beispielsweise die Spindelbaugruppe 21 ungestört vom Arbeitsbereich A in den Werkzeugwechselbereich W verstellt werden kann, während der Werkstückhalter 51 frontal vor der Spindelbaugruppe 22 oder 23 steht. Es ist aber auch möglich, dass beispielsweise zwischen den Spindelbaugruppen 22 und 23 ein kleinerer Abstand bezüglich der Y-Richtung realisiert ist, so dass beispielsweise die Arbeitsspindeln 24 zweier Spindelbaugruppen 21 und 22 oder 22 und 23 gleichzeitig Werkstücke P bearbeiten können, wenn sie vom Werkstückhalter 51 sozusagen frontal vorn bereitgestellt werden.

Die Führungsanordnung 30 umfasst zur Positionierung von Werkstücken P relativ zu den bearbeitenden Arbeitsspindeln 24 sowohl die Spindelbaugruppenführungen 31, 32, als auch die Werkstückhalter-Führungen 59, 62. Alle Führungen sind dabei Linearführungen, wobei es durchaus im Bereich des Möglichen liegt, dass eine oder mehrere Führungen auch als Drehführungen ausgestaltet sind, d.h. dass beispielsweise Werkstücke P und/oder Arbeitsspindeln 24 zur Werkstückbearbeitung geschwenkt werden. Es ist beispielsweise möglich, dass der Werkstückhalter 51 um die Schwenkachse 55 während der Werkstückbearbeitung schwenkt.

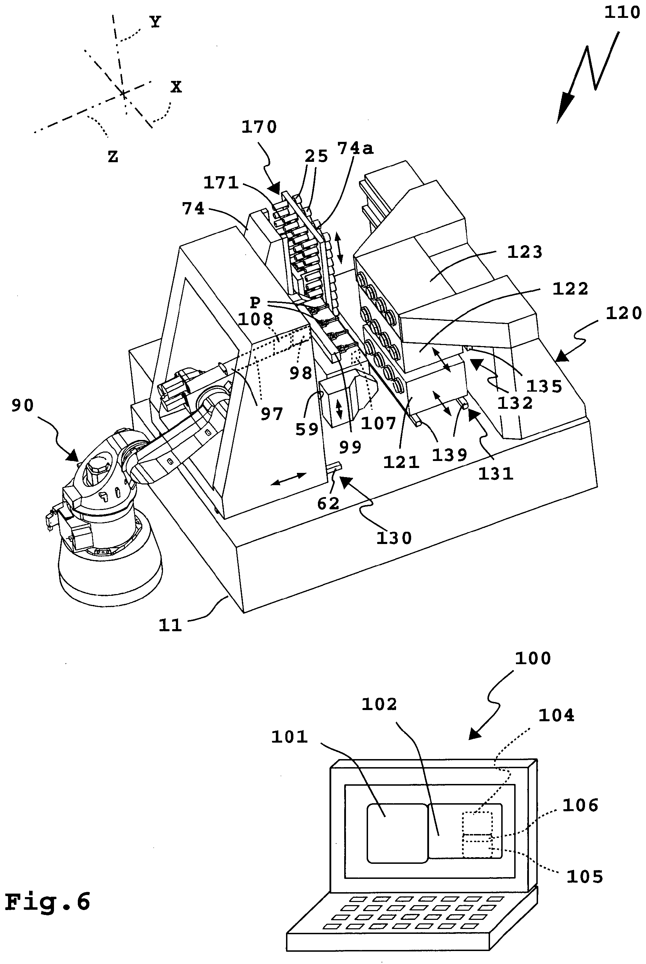

In Werkzeugwechselbereich befindet sich zweckmäßigerweise ein Werkzeugmagazin 70, 170, beispielsweise ein Regalmagazin 71 (Figuren 1 und 2) oder bei der in Figur 6 dargestellten Werkzeugmaschine 110 ein Regalmagazin 171.

Bei der Werkzeugmaschine 10a hingegen ist ein Trommelmagazin 72 vorgesehen, während bei der Werkzeugmaschine 10b ein Kettenmagazin 73 vorhanden ist.

Sämtliche Werkzeugmagazine 70, 170 ermöglichen, dass gleichzeitig mehrere Bearbeitungswerkzeuge 25 an der sich im Werkzeugwechselbereich W befindlichen Spindelbaugruppe 21, 22 gewechselt werden können. Die jeweils bereitgestellten Bearbeitungswerkzeuge 25 sind in der Reihenrichtung 27 nebeneinander angeordnet.

Beispielsweise hat ein Halter 74a des Regalmagazins 71, 171 mehrere Etagen, in denen sich jeweils 4 nebeneinander in der Reihenrichtung 27 angeordnete Bearbeitungswerkzeuge 25 befinden. Der Halter 74a des Regalmagazins ist beispielsweise an einem Ständer 74 linear in Y-Richtung beweglich geführt und mit einem nicht dargestellten Antrieb positionierbar, um die jeweils geeignete Reihe von Bearbeitungswerkzeugen 25 in Position frontal vor der jeweiligen Spindelbaugruppe 21, 22 zu positionieren.

Bei dem Trommelmagazin 72 ist eine Trommel 75 mittels eines Schlittens 76 an einem Ständer 77 in Y-Richtung verfahrbar. Die Trommel 75 weist parallel zu ihrer Drehachse 78, um die sie am Ständer 77 drehbar gelagert ist, an ihrem Außenumfang mehrere Reihen von Werkzeughaltern 80 für Bearbeitungswerkzeuge 25 auf. Durch eine Drehung um die Drehachse 78 kann eine jeweils geeignete Reihe von Werkzeughaltern 80 bzw. Bearbeitungswerkzeugen 25 in Position frontal vor der Spindelbaugruppe 21 oder 22 gebracht werden, wobei der Schlitten 76 die geeignete Y-Position einnimmt. Aus Gründen der Vereinfachung sind Antriebe für die Trommel 75 und den Schlitten 76 nicht dargestellt.

Das Kettenmagazin 73 weist mehrere Kettenstränge 79 auf, beispielsweise 3 oder 4 (entsprechend der Anzahl der Arbeitsspindeln 24 einer jeweiligen Spindelbaugruppe 21). An den Kettensträngen 79 befinden sich Werkzeughalter 80 zum Halten von Bearbeitungswerkzeugen 25.

Die Kettenstränge 79 bzw. die daran angeordneten Werkzeughalter 80 sind entsprechend der Reihenrichtung 27 nebeneinander angeordnet, so dass jeweils 4 Werkzeughalter 80 in Position frontal vor der Spindelbaugruppe 21 und der Spindelbaugruppe 22 stehen kann, wenn diese Spindelbaugruppen 21, 22 im Werkzeugwechselbereich W sind. An einem Kettenstrang 79 können z.B. auch jeweils 2 Werkzeughalter 80 entsprechend der Reihenrichtung 27 nebeneinander angeordnet sein.

Die Anordnung der Kettenstränge 79 ist dabei vorteilhaft so getroffen, dass ein vorderer Strangabschnitt 81 im Werkzeugwechselbereich W frontal vor den Spindelbaugruppen 21, 22 bzw. dem Abschnitt der Spindelbaugruppenführungen 31, 32, der sich in den Werkstückwechselbereich W hinein erstreckt, verläuft, während ein hinterer Strangabschnitt 82 für beispielsweise einen Bediener B oder eine Werkstückwechseleinrichtung 90 bequem zugänglich ist. Zwischen den Strangabschnitten 81, 82 verlaufen Strangabschnitte 83, 84 beispielsweise entlang oder parallel zur Z-Achse.

Die verschiedenen Werkzeugmagazine 70, 170 ermöglichen es also, dass die sich jeweils im Werkzeugwechselbereich W befindliche Spindelbaugruppe 21, 22 gleichzeitig sämtliche Bearbeitungswerkzeuge 25 in freie Werkzeughalter 80 abgelegt und von anderen Werkzeughaltern 80 eine andere Gruppe von Bearbeitungswerkzeugen 25 aufnimmt. Der Prozess ist sehr schnell und effektiv. Dabei ist zu beachten, dass während des Werkzeugwechsels die jeweils andere Spindelbaugruppe 21, 22 im Arbeitsbereich A die Werkstückbearbeitung fortsetzt, also ein unterbrechungsfreier Betrieb möglich ist.

Das Handling und die optimale, schnelle Werkstückbearbeitung wird durch die effektiv arbeitende nachfolgend beschriebene Werkstückwechseleinrichtung 90 weiter verbessert:

Die Werkzeugmaschine 10, 110 ist mit einem Arbeitsroboter 91 ausgestattet, der zum Auswechseln der Werkstücke P an der Werkstückhalteeinrichtung 50 vorgesehen ist und die Werkstückwechseleinrichtung 90 bildet. Die Werkstückwechseleinrichtung 90 wechselt Werkstücke P jedoch nicht nur dann, wenn die Werkzeugmaschine 10, 110 sozusagen stillsteht, d.h. wenn der Werkstückhalter 51 ortsfest ist, sondern auch wenn sich dieser relativ zu dem Gestell 20 bewegt, beispielsweise entlang der Werkzeughalter-Führung 59 und/oder 62 während der Werkstückbearbeitung. Der Arbeitsroboter 91 macht diese Bewegungen mit.

Der Arbeitsroboter 91 weist beispielsweise einen Ständer 92 auf, an dem eine Basis 93 um eine Achse 94 drehbar gelagert ist. Von der Basis 93 erstreckt sich ein Arm 95, der seinerseits an der Basis 93 um eine weitere Achse 96 schwenkbar gelagert ist. Am Arm 95 wiederum ist ein weiterer Arm 97 schwenkbar um eine Achse 97a gelagert. Somit kann ein Greif element 98 vorn am Arm 97 weitgehend frei im Raum bewegt werden. Der Arbeitsroboter 91 ist beispielsweise ein sogenannter Knickarmroboter.

Am Greifelement 98 befindet sich beispielsweise eine Magazin-Halterung 99, mit welcher der Arbeitsroboter 91 bzw. die Werkstückwechseleinrichtung 90 gleichzeitig mehrere Werkstücke P, zum Beispiel 4, ergreifen und/oder ablegen kann.

Eine Steuerung 100 mit beispielsweise einem Prozessor 101 ist zur Ansteuerung der Werkstückwechseleinrichtung 90 und der Werkstückhalteeinrichtung 50 ausgestaltet. Beispielsweise sind entsprechende Steuerleitungen zwischen der Steuerung 100 und der Werkstückwechseleinrichtung 90 sowie der Werkstückhalteeinrichtung 50 vorhanden (nicht dargestellt). Die Steuerung 100 weist zudem einen Speicher 102 auf, in dem ein Steuerungsmodul 103 gespeichert ist. Bei dem Steuerungsmodul 103 handelt es sich um ein Programmmodul mit durch den Prozessor 101 ausführbaren Programmcode. Durch Ausführung des Steuerungsmoduls 103 steuert die Steuerung 100 die Werkstückwechseleinrichtung 90 und die Werkstückhalteeinrichtung 50 derart simultan an, dass die Werkstückhalteeinrichtung 50 die Werkstücke P relativ zu den Arbeitsspindeln 24 für die entsprechende Werkstückbearbeitung positioniert und der Arbeitsroboter 91 gleichzeitig diese Bewegung mitmacht und Werkstücke P, die sich beispielsweise an dem jeweils nicht in den Arbeitsbereich A geschwenkten Werkstückhaltebereich 53 oder 54 befinden, auswechselt.

Die Werkstückwechseleinrichtung 90 ist dabei zusätzlich noch multifunktional insoweit sie beispielsweise Bearbeitungswerkzeuge 25 in die Werkzeugmagazin 70 einwechseln oder auswechseln kann, wenn gerade kein Werkstückwechsel ansteht und/oder die Werkzeugmaschine 10, 110 eine Arbeitspause hat.

Weiterhin sind exemplarisch in Figur 2 erkennbar noch 2 weitere Arbeitsstationen Q und R vorgesehen, an denen beispielsweise die Werkstücke P entgratet und vermessen werden. Der Arbeitsroboter 91 kann zum Beispiel die Werkstücke P zunächst vom Werkstückhalter 51 wegnehmen und dann sukzessive an den Arbeitsstationen Q und R zur weiteren Bearbeitung ablegen.

Bei dem Maschinenkonzept der Werkzeugmaschine 110 gemäß Figur 6 sind insoweit deren Komponenten mit der obigen Beschreibung übereinstimmen dieselben Bezugsziffern eingezeichnet.

An einem Gestell 120 der Werkzeugmaschine 110 ist oben eine ortsfeste Spindelbaugruppe 123 vorgesehen, unterhalb derer sich eine an einer Spindelbaugruppenführung 132 zwischen dem Arbeitsbereich A und dem Werkstückwechselbereich W anhand einer Spindelbaugruppenführung 132 in Richtung der X-Achse verstellbare Spindelbaugruppe 122 befindet. Unterhalb dieser Spindelbaugruppe 122 befindet sich eine weitere mobile Spindelbaugruppe 121, die an einer Spindelbaugruppenführung 131 ebenfalls in Richtung der X-Achse zwischen dem Arbeitsbereich A und dem Werkstückwechselbereich W beweglich ist. Somit können die Spindelbaugruppen 121 und 122 wie die Spindelbaugruppen 21 und 22 zwischen dem Arbeitsbereich A und dem Werkstückwechselbereich W zur Werkstückbearbeitung bzw. zum Werkstückwechsel verstellt werden.

Ein Unterschied besteht allerdings darin, dass Führungsschienen 135 der Spindelbaugruppenführung 132 direkt an dem Gestell 120 angeordnet sind, nämlich beispielsweise an der der Werkstückhalteeinrichtung 50 zugewandten Frontseite, während Führungsschienen 139 der Spindelbaugruppenführung 131 unten am Maschinenbett 11 angeordnet sind. Somit befinden sich also die Führungselemente der Spindelbaugruppenführungen 131, 132 nicht an ein und demselben Grundgestell.

In Figur 6 wird auch deutlich, dass die Beweglichkeit des Arbeitsroboters 91 derart ausgestaltet ist, dass er bis zu den Arbeitsspindeln 24 der ortsfesten Spindelbaugruppe 23, 123 hin vorstehen oder greifen kann. Sein Greifelement 98 kann beispielsweise Bearbeitungswerkzeuge 25 von diesen ortsfesten Arbeitsspindeln 24 abnehmen und gegen andere Bearbeitungswerkzeuge 25 austauschen. Das Greifelement 98 kann die Bearbeitungswerkzeuge 25 beispielsweise in einem der Werkzeugmagazine 70, 170 ablegen oder von dort aufnehmen. Somit ist eine weitere Funktion der Werkstückwechseleinrichtung 90 möglich.

Ein weiteres Ansteuerungskonzept für die Werkstückwechseleinrichtung 90, derart, dass sie den Positionierbewegungen der Werkstückhalteeinrichtung 50 folgt, ist ebenfalls im Zusammenhang mit Figur 6 angedeutet.

Die Steuerung 100 weist bei diesem Ausführungsbeispiel ein erstes Steuerungsmodul 104 zur Ansteuerung der Werkstückhalteeinrichtung 50 und ein zweites Steuerungsmodul 105 zur Ansteuerung der Werkstückwechseleinrichtung 90 auf, die beide vom Prozessor 101 direkt ausgeführt werden. Bei diesem Konzept ist es besonders einfach, dass die Steuerungsmodule 104, 105 direkt miteinander kommunizieren, beispielsweise um den Bewegungsablauf der Werkstückwechseleinrichtung 90 dem Bewegungsablauf der Werkstückhalteeinrichtung 50 anzupassen. Beispielsweise ist eine Eingangsschnittstelle 106 beim Steuerungsmodul 105 vorhanden, über welche das Steuerungsmodul 105 von dem Steuerungsmodul 104 Positionsnachrichten über anstehende oder aktuell ausgeführte Positionierbewegungen der Werkstückhalteeinrichtung 50 empfängt.

Eine weitere Variante kann vorsehen, dass beispielsweise am Werkstückhalter 51 eine Positionsmarkierung 107 vorgesehen ist, die von einer Ortungseinrichtung 108 an der Werkstückwechseleinrichtung 90 erfasst wird. Die Ortungseinrichtung 108 umfasst beispielsweise mindestens einen Funkempfänger, eine Kamera oder dergleichen andere zu einer jeweiligen Funk-basierten oder optischen Ortung ausgestaltete Empfangselemente. Anhand der Positionsmarkierung 107 kann also die Werkstückwechseleinrichtung 90, beispielsweise das Steuerungsmodul 105, die jeweilige Position des Werkstückhalters 51 erfassen und somit die Position des Greifelement 98 bzw. der Magazin-Halterung 99 simultan nachführen.

Die Ortungseinrichtung 108 und die Positionsmarkierung 107 sind auch für die Realisierung eines Sicherheitskonzepts vorteilhaft, d.h. dass beispielsweise anhand dieser Komponenten die Steuerungsmodule 103 oder 104 und 105 überprüfen, ob die Werkstückwechseleinrichtung 90 relativ zur Werkstückhalteeinrichtung 50 optimal positioniert ist.

Es versteht sich, dass diese Positionierung mit einer gewissen Toleranz behaftet sein kann. In diesem Fall ist es vorteilhaft, wenn eine Rasteinrichtung 15 und/oder eine Einführschräge 16 an den schematisch dargestellten Werkstückhaltern, die zum Beispiel Spannbacken, Klemmfläche oder dergleichen umfassen, an den Werkstückhaltebereichen 53, 54 vorgesehen sind.

## Patentansprüche

1. Werkzeugmaschine zur Werkstückbearbeitung von Werkstücken (P), wobei die Werkzeugmaschine (10; 100) eine erste Spindelbaugruppe (21; 121) und mindestens eine zweite Spindelbaugruppe mit jeweils mindestens zwei in einem gemeinsamen Spindelgehäuse (26, 126) angeordneten Arbeitsspindeln (24), an denen jeweils ein Bearbeitungswerkzeug (25) zur Werkstückbearbeitung anordenbar ist, aufweist, wobei die Werkzeugmaschine (10; 100) eine Werkstückhalteeinrichtung (50) zum Halten von Werkstücken (P) für die Werkstückbearbeitung mit den Bearbeitungswerkzeugen (25) aufweist, wobei die Werkzeugmaschine (10; 100) eine Führungsanordnung (30; 130) zur relativen Positionierung der die Werkstücke (P) haltenden Werkstückhalteeinrichtung (50) und der ersten Spindelbaugruppe (21; 121) und der mindestens einen zweiten Spindelbaugruppe (22; 122) für die Werkstückbearbeitung aufweist, wobei die erste Spindelbaugruppe (21; 121) an einer ersten Spindelbaugruppenführung (31; 131) der Führungsanordnung (30; 130) und die mindestens eine zweite Spindelbaugruppe (22; 122) an einer von der ersten Spindelbaugruppenführung separaten zweiten Spindelbaugruppenführung (32; 132) der Führungsanordnung (30; 130) geführt sind, so dass die Spindelbaugruppen unabhängig voneinander in einen Arbeitsbereich (A), in dem die Werkstücke (P) für die Werkstückbearbeitung von der Werkstückhalteeinrichtung (50) bereitgestellt werden, und einen zum Wechseln von Bearbeitungswerkzeugen (25) an den Arbeitsspindeln (24) vorgesehenen Werkzeugwechselbereich (W) verstellbar sind, **dadurch gekennzeichnet, dass** in dem Werkzeugwechselbereich (W) ein Werkzeugmagazin angeordnet ist, das zum Wechsel von mindestens zwei Bearbeitungswerkzeugen (25) ausgestaltet und vorgesehen ist, und der Werkzeugwechselbereich (W) für mindestens zwei Spindelbaugruppen an einer einzigen Werkzeugwechsel-Seite (42) neben dem Arbeitsbereich (A) vorgesehen ist, so dass die mindestens zwei Spindelbaugruppen für den Werkzeugwechsel jeweils zu derselben Werkzeugwechsel-Seite (42) bewegt werden.

2. Werkzeugmaschine nach Anspruch 1, **dadurch gekennzeichnet, dass** zwischen dem Werkzeugwechselbereich (W) und dem Arbeitsbereich (A) und/oder zwischen dem Arbeitsbereich (A) und einem zum Auswechseln der Werkstücke (P) an der Werkstückhalteeinrichtung (50) vorgesehenen Werkstückwechselbereich (S) eine Schottwand (40, 41) angeordnet ist.

3. Werkzeugmaschine nach Anspruch 1 oder 2, **dadurch gekennzeichnet, dass** in dem Werkzeugwechselbereich (W) als Werkzeugmagazin ein Rundmagazin und/oder ein Trommelmagazin (72) und/oder ein Kettenmagazin (73) und/oder ein Regalmagazin (71; 171) angeordnet ist und/oder dass das Werkzeugmagazin zum gleichzeitigen Wechsel von mindestens zwei Bearbeitungswerkzeugen (25) ausgestaltet und vorgesehen ist.

4. Werkzeugmaschine nach einem der vorhergehenden Ansprüche, **dadurch gekennzeichnet, dass** die erste Spindelbaugruppenführung (31; 131) und/oder die zweite Spindelbaugruppenführung (32; 132) als Linearführungen (36) ausgestaltet sind und/oder die erste Spindelbaugruppenführung (31; 131) und die zweite Spindelbaugruppenführung (32; 132) parallel verlaufende Führungsachsen (33, 34) aufweisen und/oder die erste Spindelbaugruppenführung (31; 131) und/oder die zweite Spindelbaugruppenführung (32; 132) im Wesentlichen horizontal verlaufende Führungsachsen (33, 34) aufweisen.

5. Werkzeugmaschine nach einem der vorhergehenden Ansprüche, **dadurch gekennzeichnet, dass** die Arbeitsspindeln (24) mindestens einer der Spindelbaugruppen in einer Reihenrichtung (27) nebeneinander angeordnet ist, wobei die Reihenrichtung (27) zweckmäßigerweise parallel zu einer Führungsachse (33, 34) der ersten Spindelbaugruppenführung (31; 131) und/oder der zweiten Spindelbaugruppenführung (32; 132) verläuft.

6. Werkzeugmaschine nach einem der vorhergehenden Ansprüche, **dadurch gekennzeichnet, dass** mindestens zwei Arbeitsspindeln (24) einer Spindelbaugruppe (21; 121) horizontal nebeneinander oder horizontal übereinander angeordnet sind.

7. Werkzeugmaschine nach einem der vorhergehenden Ansprüche, **dadurch gekennzeichnet, dass** in dem Arbeitsbereich (A) mindestens eine ortsfeste Spindelbaugruppe (23; 123) mit mindestens einer Arbeitsspindel (24), vorteilhaft mindestens zwei Arbeitsspindeln (24), angeordnet ist, wobei vorteilhaft die erste Spindelbaugruppe (21; 121) und/oder die mindestens eine zweite Spindelbaugruppe (22; 122) in dem Arbeitsbereich (A) unterhalb der mindestens einen ortsfesten Spindelbaugruppe (23; 123) angeordnet ist.

8. Werkzeugmaschine nach einem der vorhergehenden Ansprüche, **dadurch gekennzeichnet, dass** sie eine insbesondere einen Arbeitsroboter (91) umfassende Werkstückwechseleinrichtung (90) zum Auswechseln von Werkstücken (P) an der Werkstückhalteeinrichtung (50) aufweist.

9. Werkzeugmaschine nach Anspruch 8, **dadurch gekennzeichnet, dass** die Werkstückwechseleinrichtung (90) eine Positionierbewegung eines Werkstückhalters (51) der Werkstückhalteeinrichtung (50) während der Werkstückbearbeitung durch das jeweilige Bearbeitungswerkzeug (25) mitmacht und zum Austausch mindestens eines nicht in der Werkstückbearbeitung befindlichen Werkstücks (P) an dem Werkstückhalter (51) während der Werkstückbearbeitung eines anderen vom Werkstückhalter (51) gehaltenen Werkstücks (P) durch mindestens eine der Spindelbaugruppen ausgestaltet ist und/oder dass die Werkstückwechseleinrichtung (90) zusätzlich zu dem Auswechseln von Werkstücken (P) auch zum Auswechseln von Bearbeitungswerkzeugen (25) an einem Werkzeugmagazin und/oder an der mindestens einen ortsfest im Arbeitsbereich (A) angeordneten Arbeitsspindel (24), insbesondere zum Durchgreifen eines Gestells der Werkzeughalteeinrichtung, ausgestaltet ist.

10. Werkzeugmaschine nach einem der vorhergehenden Ansprüche, **dadurch gekennzeichnet, dass** die Führungsanordnung (30; 130) eine Werkstückhalter-Führung (59, 62) zum Führen der Werkstückhalteeinrichtung (50) für eine Positionierung eines die Werkstücke (P) haltenden Werkstückhalters (51) relativ zu den jeweils bearbeitenden Bearbeitungswerkzeugen (25) aufweist.

11. Werkzeugmaschine nach Anspruch 10, **dadurch gekennzeichnet, dass** die Werkstückhalter-Führung (59, 62) zum Führen des Werkstückhalters (51) in mindestens einer zu Spindelbaugruppen-Führungsachsen der ersten Spindelbaugruppenführung (31; 131) und/oder der zweiten Spindelbaugruppenführung (32; 132) der ersten oder mindestens einen zweiten Spindelbaugruppe (22; 122) quer, insbesondere rechtwinkelig quer, verlaufenden Werkstück-Führungsachse (63) ausgestaltet ist und/oder dass die Spindelbaugruppenführungen (31, 32; 131, 132) der ersten Spindelbaugruppe (21; 121) und der mindestens einen zweiten Spindelbaugruppe (22; 122) zu einer linearen Verstellung parallel zu einer ersten Führungsachse, insbesondere einer horizontal verlaufenden X-Achse, vorgesehen sind und die Werkstückhalter-Führung (59, 62) zum Führen des Werkstückhalters (51) parallel zu einer zu der ersten Führungsachse rechtwinkeligen, insbesondere in einer horizontalen Z-Achse, verlaufenden, zweiten Führungsachse und einer dritten zu der ersten Führungsachse und der zweiten Führungsachse jeweils rechtwinkeligen dritten, insbesondere vertikal in Y-Richtung verlaufenden, Führungsachse vorgesehen ist.

12. Werkzeugmaschine nach einem der vorhergehenden Ansprüche, **dadurch gekennzeichnet, dass** die erste Spindelbaugruppenführung (31; 131) und/oder die zweite Spindelbaugruppenführung (32; 132) für eine Positionierung und/oder eine Zustellbewegung der jeweiligen Spindelbaugruppe zu mindestens einem jeweils zu bearbeitenden Werkstück (P) vorgesehen ist.

13. Werkzeugmaschine nach einem der vorhergehenden Ansprüche, **dadurch gekennzeichnet, dass** die Arbeitsspindeln (24) mindestens einer der Spindelbaugruppen oder aller Spindelbaugruppen ortsfest oder beweglich in dem jeweiligen Spindelgehäuse (26, 126) angeordnet sind.

14. Werkzeugmaschine nach einem der vorhergehenden Ansprüche, **dadurch gekennzeichnet, dass** die Spindelbaugruppenführung mindestens einer der Spindelbaugruppen an einem turmartigen oder portalartigen Gestell der Werkzeugmaschine (10; 100) angeordnet sind und/oder dass mindestens zwei Spindelbaugruppenführungen (31, 32; 131, 132) an voneinander separaten Gestellen angeordnet sind.

15. Werkzeugmaschine nach einem der vorhergehenden Ansprüche, **dadurch gekennzeichnet, dass** die Arbeitsspindeln (24) der ersten Spindelbaugruppe (21; 121) und die Arbeitsspindeln (24) der mindestens einen zweiten Spindelbaugruppe (22; 122) gleichzeitig in bearbeitendem Eingriff mit den von der Werkstückhalteeinrichtung (50) gehaltenen Werkstücken (P) bringbar sind und/oder die Spindelbaugruppenführungen (31, 32; 131, 132) der Spindelbaugruppen einen derartigen Abstand zueinander haben, dass bei Werkstückbearbeitung der Werkstücke (P) durch die eine Spindelbaugruppe die andere Spindelbaugruppe an der Werkstückhalteeinrichtung (50) vorbei bewegbar ist.

## Claims

1. Machine tool for the workpiece machining of workpieces (P), wherein the machine tool (10; 100) has a first spindle assembly (21; 121) and at least one second spindle assembly with in each case at least two work spindles (24) mounted in a common spindle housing (26, 126), and on each of which a machining tool (25) for workpiece machining may be mounted, wherein the machine tool (10; 100) has a workpiece holding unit (50) for holding of workpieces (P) for workpiece machining by the machining tools (25), wherein the machine tool (10; 100) has a guide assembly (30; 130) for the relative positioning of the workpiece holding unit (50) holding the workpieces (P) and the first spindle assembly (21; 121) and the second spindle assembly or assemblies (22; 122) for the workpiece machining, wherein the first spindle assembly (21; 121) is guided on a first spindle assembly guide (31; 131) of the guide assembly (30; 130) and the second spindle assembly or assemblies (22; 122) are guided on a second spindle assembly guide (32; 132) of the guide assembly (30; 130) which is separate from the first spindle assembly guide, so that the spindle assemblies are adjustable independently of one another in a working area (A) in which the workpieces (P) for workpiece machining are provided by the workpiece holding unit (50) and a tool change area (W) provided for the changeover of machining tools (25) on the work spindles (24), **characterised in that** there is provided in the tool change area (W) a tool magazine which is designed and provided for the changeover of at least two machining tools (25), and the tool change area (W) is provided for at least two spindle assemblies on a single tool change side (42) next to the working area (A), so that the two or more spindle assemblies are moved in each case to the same tool change side (42) for the tool changeover.

2. Machine tool according to claim 1, **characterised in that** a partition wall (40, 41) is provided between the tool change area (W) and the working area (A) and/or between the working area (A) and a workpiece changeover area (S) provided for changing the workpieces (P) on the workpiece holding unit (50).

3. Machine tool according to claim 1 or 2, **characterised in that** there is provided in the tool change area (W) as tool magazine a circular magazine and/or a drum magazine (72) and/or a chain magazine (73) and/or a rack magazine (71; 171), and/or that the tool magazine is designed and provided for the simultaneous changeover of at least two machining tools (25).

4. Machine tool according to any of the preceding claims, **characterised in that** the first spindle assembly guide (31; 131) and/or the second spindle assembly guide (32; 132) are in the form of linear guides (36), and/or the first spindle assembly guide (31; 131) and the second spindle assembly guide (32; 132) have parallel guide axes (33, 34), and/or the first spindle assembly guide (31; 131) and/or the second spindle assembly guide (32; 132) have guide axes (33, 34) running substantially horizontally.

5. Machine tool according to any of the preceding claims, **characterised in that** the work spindles (24) of at least one of the spindle assemblies are arranged side by side in a row direction (27), wherein the row direction (27) runs expediently parallel to a guide axis (33, 34) of the first spindle assembly guide (31; 131) and/or the second spindle assembly guide (32; 132).

6. Machine tool according to any of the preceding claims, **characterised in that** at least two work spindles (24) of a spindle assembly (21; 121) are arranged horizontally next to one another or horizontally one above the other.

7. Machine tool according to any of the preceding claims, **characterised in that** at least one stationary spindle assembly (23; 123) with at least one work spindle (24), advantageously at least two work spindles (24), is located in the working area (A), wherein advantageously the first spindle assembly (21; 121) and/or the second spindle assembly or assemblies (22; 122) is or are located below the stationary spindle assembly or assemblies (23; 123).

8. Machine tool according to any of the preceding claims, **characterised in that** it has a workpiece changeover unit (90), in particular including a working robot (91), for changing workpieces (P) on the workpiece holding unit (50).

9. Machine tool according to claim 8, **characterised in that** the workpiece changeover unit (90) accompanies a positioning movement of a work holder (51) of the workpiece holding unit (50) during workpiece machining by the respective machining tool (25) and is designed for replacing in the work holder (51) at least one workpiece (P) not involved in workpiece machining, during the workpiece machining of another workpiece (P) held by the work holder (51), by at least one of the spindle assemblies, and/or that the workpiece changeover unit (90) is also designed, in addition to the changing of workpieces (P), for the changing of machining tools (25) at a tool magazine and/or at the work spindle or spindles (24) mounted immovably in the working area (A), in particular for reaching through a frame of the tool holder unit.

10. Machine tool according to any of the preceding claims, **characterised in that** the guide assembly (30; 130) has a work holder guide (59, 62) to guide the workpiece holding unit (50) for positioning a work holder (51) holding the workpieces (P) relative to the machining tools (25) operating in each case.

11. Machine tool according to claim 10, **characterised in that** the work holder guide (59, 62) is designed to guide the work holder (51) in at least one workpiece guide axis (63) running transversely, in particular transversely at right-angles to spindle assembly guide axes of the first spindle assembly guide (31; 131) and/or the second spindle assembly guide (32; 132) of the first or at least one second spindle assembly (22; 122), and/or that the spindle assembly guides (31. 32; 131. 132) of the first spindle assembly (21; 121) and of the second spindle assembly or assemblies (22; 122) are provided for a linear adjustment parallel to a first guide axis, in particular a horizontally running X-axis, and the work holder guide (59, 62) is provided to guide the work holder (51) parallel to a second guide axis running at right-angles to the first guide axis, in particular in a horizontal Z-axis and a third guide axis at right-angles to the first guide axis and the second guide axis respectively, running in particular vertically in the Y-direction.

12. Machine tool according to any of the preceding claims, **characterised in that** the first spindle assembly guide (31; 131) and/or the second spindle assembly guide (32; 132) are or is provided for positioning and/or a feed movement of the respective spindle assembly to at least one workpiece (P) to be machined in each case.

13. Machine tool according to any of the preceding claims, **characterised in that** the work spindles (24) of at least one of the spindle assemblies or of all spindle assemblies are mounted immovably or movably in the respective spindle housing (26, 126).

14. Machine tool according to any of the preceding claims, **characterised in that** the spindle assembly guide of at least one of the spindle assemblies is located on a tower-like or portal-like frame of the machine tool (10; 100) and/or that at least two spindle assembly guides (31, 32; 131, 132) are located on frames separate from one another.

15. Machine tool according to any of the preceding claims, **characterised in that** the work spindles (24) of the first spindle assembly (21; 121) and the work spindles (24) of the second spindle assembly or assemblies (22; 122) may be brought simultaneously into machining engagement with workpieces (P) held by the workpiece holding unit (50), and/or the spindle assembly guides (31, 32; 131, 132) of the spindle assemblies are spaced apart in such a way that, during workpiece machining of the workpieces (P) by the one spindle assembly, the other spindle assembly may be moved past the workpiece holding unit (50).

## Revendications

1. Machine-outil servant à usiner des pièces (P), dans laquelle la machine-outil (10 ; 100) présente un premier module à broches (21 ; 121) et au moins un deuxième module à broches avec respectivement au moins deux broches de travail (24) disposées dans un boîtier de broche (26, 126) commun, au niveau desquelles respectivement un outil d'usinage (25) servant à l'usinage de pièces peut être disposé, dans laquelle la machine-outil (10 ; 100) présente un dispositif de maintien de pièces (50) servant à maintenir des pièces (P) pour l'usinage de pièce avec les outils d'usinage (25), dans laquelle la machine-outil (10; 100) présente un ensemble de guidage (30; 130) servant au positionnement relatif du dispositif de maintien de pièces (50) maintenant les pièces (P) et du premier module à broches (21 ; 121) et de l'au moins un deuxième module à broches (22 ; 122) pour l'usinage de pièce, dans laquelle le premier module à broches (21 ; 121) est guidé au niveau d'un premier guidage de module à broches (31 ; 131) de l'ensemble de guidage (30 ; 130) et l'au moins un deuxième module à broches (22 ; 122), au niveau d'un deuxième guidage de module à broches (32 ; 132), séparé du premier guidage de module à broches, de l'ensemble de guidage (30 ; 130) de sorte que les modules à broches puissent être ajustés indépendamment les uns des autres dans une zone de travail (A), dans laquelle les pièces (P) sont fournies pour l'usinage de pièce par le dispositif de maintien de pièces (50), et une zone de remplacement d'outil (W) prévue pour remplacer des outils d'usinage (25) au niveau des broches de travail (24), **caractérisée en ce qu'**est disposé dans la zone de remplacement d'outil (W) un magasin d'outils, qui est configuré et prévu pour remplacer au moins deux outils d'usinage (25), et la zone de remplacement d'outil (W) pour au moins deux modules à broches est prévue au niveau d'un unique côté de remplacement d'outil (42) à côté de la zone de travail (A) de sorte que les au moins deux modules à broches soient déplacés pour le remplacement d'outil respectivement vers le même côté de remplacement d'outil (42).

2. Machine-outil selon la revendication 1, **caractérisée en ce qu'**une cloison étanche (40, 41) est disposée entre la zone de remplacement d'outil (W) et la zone de travail (A) et/ou entre la zone de travail (A) et une zone de remplacement de pièce (S) prévue pour échanger les pièces (P) au niveau du dispositif de maintien de pièces (50).

3. Machine-outil selon la revendication 1 ou 2, **caractérisée en ce qu'**un chargeur rond et/ou un chargeur en cylindre (72) et/ou un chargeur à chaînes (73) et/ou un chargeur à rayonnages (71 ; 171) sont disposés dans la zone de remplacement d'outil (W) en tant que chargeur d'outils, et/ou que le chargeur d'outils est configuré et prévu pour remplacer de manière simultanée au moins deux outils d'usinage (25).

4. Machine-outil selon l'une quelconque des revendications précédentes, **caractérisée en ce que** le premier guidage de module à broches (31 ; 131) et/ou le deuxième guidage de module à broches (32 ; 132) sont configurés en tant que guidages linéaires (36), et/ou le premier guidage de module à broches (31 ; 131) et le deuxième guidage de module à broches (32 ; 132) présentent des axes de guidage (33, 34) s'étendant de manière parallèle, et/ou le premier guidage de module à broches (31 ; 131) et/ou le deuxième guidage de module à broches (32 ; 132) présentent des axes de guidage (33, 34) s'étendant sensiblement de manière horizontale.

5. Machine-outil selon l'une quelconque des revendications précédentes, **caractérisée en ce que** les broches de travail (24) d'au moins un des modules à broches sont disposées les unes à côté des autres dans une direction d'alignement (27), dans laquelle la direction d'alignement (27) s'étend de manière appropriée de manière parallèle par rapport à un axe de guidage (33, 34) du premier guidage de module à broches (31 ; 131) et/ou du deuxième guidage de module à broches (32 ; 132).

6. Machine-outil selon l'une quelconque des revendications précédentes, **caractérisée en ce qu'**au moins deux broches de travail (24) d'un module à broches (21 ; 121) sont disposées les unes à côté des autres de manière horizontale et les unes au-dessus des autres de manière horizontale.

7. Machine-outil selon l'une quelconque des revendications précédentes, **caractérisée en ce qu'**au moins un module à broches (23 ; 123) stationnaire avec au moins une broche de travail (24), de manière avantageuse au moins deux broches de travail (24), est disposé dans la zone de travail (A), dans laquelle de manière avantageuse le premier module à broches (21 ; 121) et/ou l'au moins un deuxième module à broches (22 ; 122) sont disposés dans la zone de travail (A) sous l'au moins un module à broches (23 ; 123) stationnaire.

8. Machine-outil selon l'une quelconque des revendications précédentes, **caractérisée en ce qu'**elle présente un dispositif de remplacement de pièce (90) comprenant en particulier un robot de travail (91), servant à échanger des pièces (P) au niveau du dispositif de maintien de pièces (50).

9. Machine-outil selon la revendication 8, **caractérisée en ce que** le dispositif de remplacement de pièce (90) accompagne un déplacement de positionnement d'un porte-pièce (51) du dispositif de maintien de pièces (50) au cours de l'usinage de pièce à travers l'outil d'usinage (25) respectif et est configuré pour échanger au moins une pièce (P) ne se trouvant pas dans l'usinage de pièce au niveau du porte-pièce (51) au cours de l'usinage de pièce d'une autre pièce (P) maintenue par le porte-pièce (51) par au moins un des modules à broches, et/ou que le dispositif de remplacement de pièce (90) est configuré en plus de l'échange de pièces (P) également pour échanger des outils d'usinage (25) au niveau d'un chargeur d'outils et/ou au niveau de l'au moins une broche de travail (24) disposée de manière stationnaire dans la zone de travail (A), en particulier pour traverser un châssis du dispositif de maintien d'outils.

10. Machine-outil selon l'une quelconque des revendications précédentes, **caractérisée en ce que** l'ensemble de guidage (30 ; 130) présente un guidage de porte-pièce (59, 62) servant à guider le dispositif de maintien de pièces (50) pour un positionnement d'un porte-pièce (51) maintenant les pièces (P) par rapport aux outils d'usinage (25) respectivement d'usinage.

11. Machine-outil selon la revendication 10, **caractérisée en ce que** le guidage de porte-pièce (59, 62) est configuré pour guider le porte-pièce (51) dans au moins un axe de guidage de pièce (63) s'étendant de manière transversale, en particulier de manière transversale à angle droit, par rapport aux axes de guidage de modules à broches du premier guidage de module à broches (31 ; 131) et/ou du deuxième guidage de module à broches (32 ; 132) du premier ou au moins d'un deuxième module à broches (22 ; 122), et/ou que les guidages de module à broches (31, 32 ; 131, 132) du premier module à broches (21 ; 121) et de l'au moins un deuxième module à broches (22 ; 122) sont prévus aux fins d'un ajustement linéaire de manière parallèle par rapport à un premier axe de guidage, en particulier un axe X s'étendant de manière horizontale, et le guidage de porte-pièce (59, 62) est prévu pour guider le porte-pièce (51) de manière parallèle par rapport à un deuxième axe de guidage s'étendant à angle droit, en particulier dans un axe Z horizontal, par rapport au premier axe de guidage et à un troisième troisième axe de guidage respectivement à angle droit par rapport au premier axe de guidage et au deuxième axe de guidage, en particulier s'étendant de manière verticale dans la direction Y.

12. Machine-outil selon l'une quelconque des revendications précédentes, **caractérisée en ce que** le premier guidage de module à broches (31 ; 131) et/ou le deuxième guidage de module à broches (32 ; 132) sont prévus pour un positionnement et/ou un déplacement de rapprochement du module à broches respectif vers au moins une pièce (P) respectivement à usiner.

13. Machine-outil selon l'une quelconque des revendications précédentes, **caractérisée en ce que** les broches de travail (24) d'au moins un des modules à broches ou de tous les modules à broches sont disposées de manière stationnaire ou de manière mobile dans le boîtier de broche (26, 126) respectif.

14. Machine-outil selon l'une quelconque des revendications précédentes, **caractérisée en ce que** le guidage de module à broches d'au moins un des modules à broches est disposé au niveau d'un châssis de type tour ou de type portique de la machine-outil (10 ; 100), et/ou qu'au moins deux guidages de module à broches (31, 32; 131, 132) sont disposés au niveau de châssis séparés les uns des autres.

15. Machine-outil selon l'une quelconque des revendications précédentes, **caractérisée en ce que** les broches de travail (24) du premier module à broches (21 ; 121) et les broches de travail (24) de l'au moins un deuxième module à broches (22; 122) peuvent être amenées en prise d'usinage de manière simultanée avec les pièces (P) maintenues par le dispositif de maintien de pièces (50), et/ou les guidages de module à broches (31, 32 ; 131, 132) des modules à broches ont les uns par rapport aux autres un espacement tel que lors de l'usinage de pièces des pièces (P) par un module à broches, l'autre module à broches peut être déplacé le long du dispositif de maintien de pièces (50).
